# EUROPEAN PATENT APPLICATION

(11) **EP 1 596 338 A1**
(43) Date of publication of application: **16.11.2005**
(21) Application number: 05103889.1
(22) Date of filing: 10.05.2005
(51) Int. Cl.: G06T 17/40

(54) **Interactive exploded views from 2D images**

(30) Priority: 10.05.2004 US 842271
(71) Applicant: MICROSOFT CORPORATION, Redmond, WA 98052 (US)
(72) Inventor: Agrawala, Maneesh c/o Microsoft Corporation, Redmond, WA 98052 (US); Li, Wilmot Wei-Mau c/o Microsoft Corporation, Redmond, WA 98052 (US)
(74) Representative: Grünecker, Kinkeldey, Stockmair & Schwanhäusser Anwaltssozietät

(57) **Abstract**

A framework for authoring and presenting an interactive exploded view diagram from an image or set of images. The framework includes an authoring component that receives the image and facilitates processing of the image into the exploded view diagram, and a viewing component that facilitates dynamic filtering of diagram information of the exploded view diagram associated with user interaction. The resulting interactive diagram is a 2.5D layer-based diagram that facilitates user interaction to expand or collapse portions of the rendered view diagram.

## Description

### TECHNICAL FIELD

This invention is related to a software tool, and more specifically, an interactive software tool that takes a static diagram and makes it interactive.

### BACKGROUND OF THE INVENTION

Interactivity is one of the key capabilities of computers that sets them apart from other types of information displays such as books, television, and radio. Yet, most of the information viewed on computers via the Internet does not take advantage of this interactivity.

Diagrams are extremely effective for communicating the structure of complex 3D objects that are composed of many subparts, such as mechanical assemblies, architectural environments, and biological organisms. To elucidate the composite structure of such objects, illustrators commonly use diagrammatic techniques such as exploded views that reduce or eliminate occlusion and expose internal parts.

However, because exploded views are usually designed as static illustrations for print publications, they often suffer from two important drawbacks:

Ambiguous spatial relationships. A static diagram can only show a fixed set of spatial relationships between parts. For complex objects, it may not be clear from a static exploded view how all the parts fit together, interact with, and constrain one another.

Visual clutter. Static diagrams are usually designed to include all the information the viewer might need about the object. As a result, they are often visually cluttered, making it difficult to extract specific information about a particular part or subset of parts without carefully perusing the entire illustration.

In contrast, exploded view diagrams viewed through a computer can alleviate both of these problems by allowing viewers to interactively manipulate the parts and thereby dynamically filter the information presented in the diagram. For example, a viewer might interactively expand and collapse only the wheel assembly of a car diagram to better understand how the parts of that assembly interact with one another. On the other hand, a static, general-purpose car diagram would have to show all of the parts in an exploded state, making it difficult to focus on the wheel assembly. In general, interactive diagrams can be far more clear, informative, and compelling than their static counterparts.

In addition, traditional systems do not produce interactive illustrations that allow users to directly manipulate the parts of the diagram.

What is needed is a tool that leverages the interactive capabilities of the computer as applied to static diagrams.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention disclosed and claimed herein, in one aspect thereof, comprises architecture for creating and viewing interactive exploded view diagrams in which viewers can directly manipulate parts, and thereby dynamically filter the information presented by expanding and collapsing the exploded view to search for individual parts. The present invention overcomes the deficiencies and shortfalls of the prior art by making the static exploded view diagrams interactive, which are typically visually cluttered or unclear. Furthermore, whereas prior systems are aimed at providing completely automated prepackaged designs and thereby eliminating the need for a human designer, the present invention provides semi-automatic high-level interactive design tools that enable human designers to quickly produce the desired illustration.

The framework comprises two main components; a suite of semi-automatic, sketch-based authoring tools that allows a user to quickly create interactive diagrams using 2D images as input; and, a viewing system that allows the user to directly expand and collapse the exploded view, and search for individual parts.

In another aspect of the present invention, a classifier is provided to automate features by making inferences based on data associated with the authoring component and the viewing component.

To the accomplishment of the foregoing and related ends, certain illustrative aspects of the invention are described herein in connection with the following description and the annexed drawings. These aspects are indicative, however, of but a few of the various ways in which the principles of the invention can be employed and the present invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 illustrates a system in accordance with the present invention.
FIG. 2 illustrates a flow chart of a rendering process in accordance with the present invention.
FIG. 3A illustrates a collapsed view of the master cylinder in accordance with the present invention.
FIG. 3B illustrates a partially expanded view of the master cylinder, with its reservoir cover and reservoir diaphragm exposed vertically.
FIG. 3C illustrates a further expanded view of the master cylinder in accordance with the present invention.
FIG. 4 illustrates a flow chart of an authoring process for converting a static 2D exploded view of the diagram into an interactive diagram in accordance with the present invention.
FIG. 5 illustrates a flowchart for creating parts in accordance with the present invention.
FIG. 6 illustrates a flow chart for one implementation of a stacking process in accordance with the present invention.
FIG. 7A illustrates the initial position of the reservoir cover relative to a center point of the root part that is a housing of the master cylinder of FIG. 3A.
FIG. 7B illustrates the maximum offset stack parameter using the expanded master cylinder of FIG. 3B.
FIG. 7C illustrates a stack hierarchy for an expanded master cylinder.
FIG. 8A illustrates an assembly breakout of an automatic transmission part.
FIG. 8B illustrates the free-form stroke drawn from a bottom part to a top part 806.
FIG. 8C illustrates that the system processes the stroke as a straight line explosion axis from an approximate center of the bottom part to an approximate center of the top part.
FIG. 8D illustrates that the user can then interactively adjust the explosion axis, if necessary.
FIG. 9 illustrates a flow chart of one process for layering in accordance with the present invention.
FIG. 10 illustrates a geometric representation of the semi-automatic fragmentation tool in accordance with the present invention.
FIG. 11 illustrates a restriction that can be employed in accordance with the present invention.
FIG. 12 illustrates the semi-automatic fragmentation process for a cover of the transmission assembly of FIG. 8A.
FIG. 13 illustrates an example of a cavity with a non-planar opening.
FIG. 14 illustrates a flow chart of one implementation of the semi-automatic depth assignment tool in accordance with the present invention.
FIG. 15A illustrates three interlocking parts that are expanded along an explosion axis.
FIG. 15B illustrates the partial collapse of the interlocking parts.
FIG. 15C illustrates total collapse of the interlocking parts in a port of the housing of the master cylinder.
FIG. 16 illustrates a flow chart of one implementation for processing non-adjacent parts that overlap in accordance with the present invention.
FIG. 17 illustrates a flow chart of one implementation of the authoring process where one or more assumptions are violated.
FIG. 18 illustrates a flow chart for one implementation for annotation in accordance with the present invention.
FIG. 19 illustrates a flow chart of one process for viewing a layout in accordance with the present invention.
FIG. 20 illustrates a flow chart of one process for animation expansion and collapse.
FIG. 21 illustrates a flow chart of a process for a part search in accordance with the present invention.
FIG. 22 illustrates a part search operation in accordance with the present invention.
FIG. 23 illustrates the system of FIG. 1 further employing artificial intelligence in accordance with the present invention.
FIG. 24 illustrates a block diagram of a computer operable to execute the disclosed architecture.
FIG. 25 illustrates a schematic block diagram of an exemplary computing environment in accordance with the present invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention can be practiced without these specific details. In other instances, well-known structures and devices are shown in block diagram form in order to facilitate describing the present invention.

As used in this application, the terms "component" and "system" are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

As used herein, the term to "infer" or "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

### INTERACTIVE EXPLODED VIEWS FROM 2D IMAGES

The disclosed architecture is a novel framework for creating and viewing interactive exploded view diagrams of complex mechanical assemblies. Rather than using 3D models as input, dynamic illustrations are constructed from 2D images, resulting in a layered 2.5D diagram representation. This image-based strategy has several key benefits: it is easy to support arbitrary rendering styles by simply finding or creating pictures of each part of the object in the desired style; it obviates the need for 3D models, which are, in general, much more difficult to acquire or build than images; and, finally, using 2D images allows leveraging the abundance of existing static exploded views commonly found in textbooks, repair manuals, and other educational material.

One of the main features is a 2.5D representation for interactive diagrams that consists of layers of images. To facilitate the creation of diagrams in this format, a set of 2.5D authoring tools is provided. Although layer-based representations are not new in computer graphics, most of this previous work on 2.5D authoring has focused primarily on creating layered animations. Traditionally, tools can be provided that select, bend, and even delete entire objects, rather than pixels, in digital photographs. In contrast to these general-purpose systems, the disclosed architecture focuses on the specific authoring issues involved in creating interactive image-based exploded view diagrams.

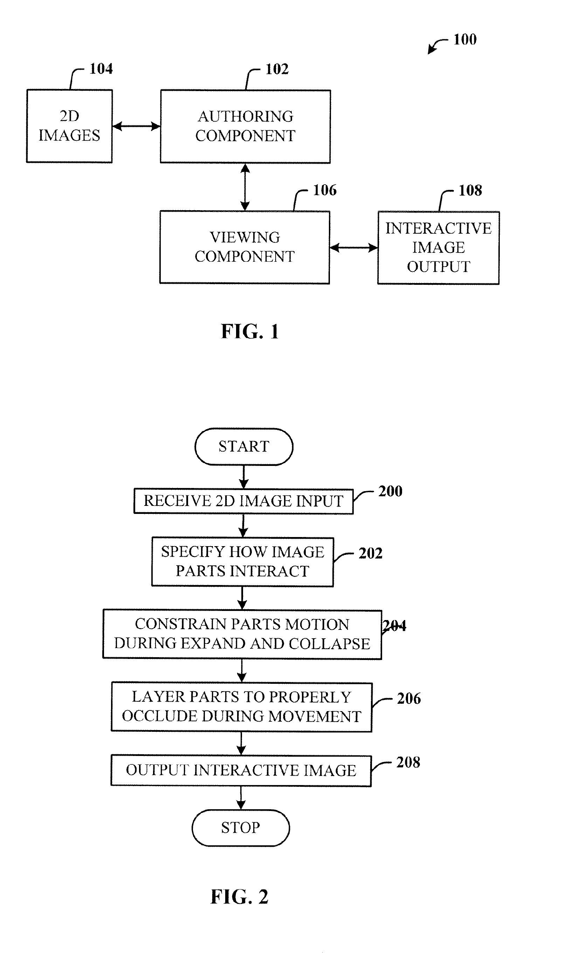

Referring now to FIG. 1, there is illustrated a system 100 in accordance with the present invention. The system 100 includes an authoring component 102 that receives as an input one or more 2D images 104 for processing. One challenge in turning a 2D image into an interactive exploded view diagram is specifying how parts interact with one another. The authoring component 102 is a suite of semi-automatic tools that facilitate constraining the motion of parts as the parts are expanded and collapsed, for layering parts to properly occlude one another as the parts move, and for annotating the diagram with part labels and guidelines that explicitly show how parts move relative to one another. The authoring component 102 allows a user to quickly create compelling interactive diagrams *via* simple, sketch-based interactions.

The authoring component 102 interfaces to an interactive viewing component 106 that helps a viewer dynamically filter the information presented in a diagram. The viewing component 106 supports a number of useful interactions. Specifically, the viewing component 106 facilitates an interactive image output 108 that allows the user to directly expand and collapse the exploded view, and search for individual parts. These interactions help the viewer understand the spatial relationships between parts and the overall structure of the object.

The image-based system 100 enables direct support of arbitrary rendering styles, eliminates the need for building 3D models, and allows leverage of the abundance of existing static diagrams of complex objects.

Referring now to FIG. 2, there is illustrated a flow chart of a rendering process in accordance with the present invention. While, for purposes of simplicity of explanation, the one or more methodologies shown herein, *e.g.,* in the form of a flow chart, are shown and described as a series of acts, it is to be understood and appreciated that the present invention is not limited by the order of acts, as some acts may, in accordance with the present invention, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

At 200, a 2D image is received as an input to the system. At 202, the user specifies how image parts interact. At 204, parts motion is constrained during expansion and collapse. At 206, parts are layered to properly occlude during movement relative to one another. At 208, the interactive image is output. The process then reaches a Stop block.

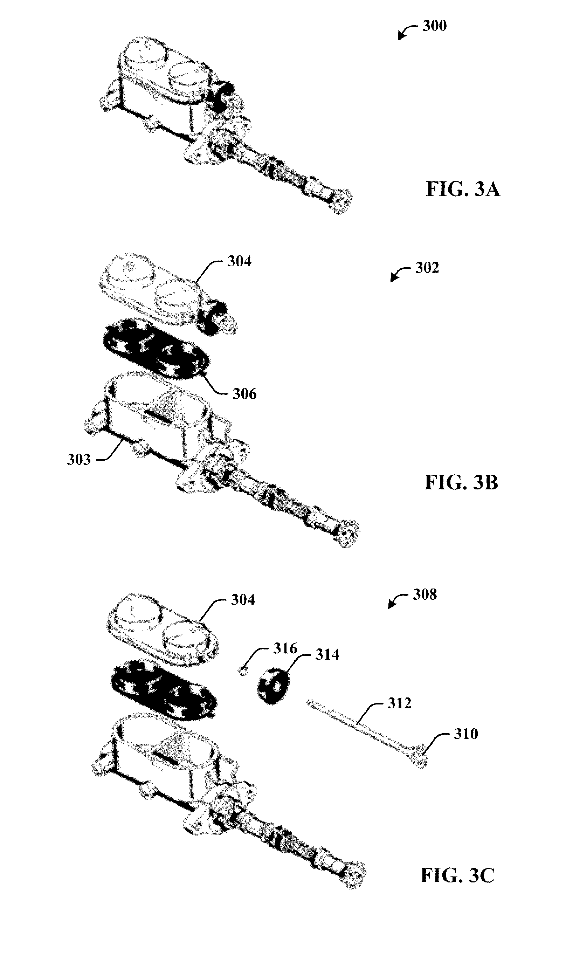

Figures 3A-3C illustrate a 2D image that has been processed in accordance with the present invention to provide an interactive version showing partial expansion of an automobile master cylinder. FIG. 3A illustrates a collapsed view 300 of the master cylinder in accordance with the present invention. FIG. 3B illustrates a partially expanded view 302 of the master cylinder, with its reservoir 303, reservoir cover 304, and reservoir diaphragm 306 exposed in vertical alignment. The user need only select and drag the cover 304 to expand and expose the underlying parts such as the reservoir 303 and diaphragm 306. FIG. 3C illustrates a further expanded view 308 of the master cylinder horizontally in accordance with the present invention. Here, the user can select (or grab) and drag a distal end 310 a push rod 312 to expand and expose an associated dust boot 314 and push rod retainer 316. The reverse is also true, where the user can select and drag the push rod 312 towards the cover 304 to collapse the parts as viewed in both FIG. 3A and FIG. 3B. Note that the user is not restricted to grabbing the end part 310, but can grab any intervening part and drag it for expansion or collapse. For example, the user can grab the dust boot 314 and drag it horizontally toward the cover 304 to collapse it, while leaving the push rod 312 exposed in expanded view. The reverse is true for grabbing the dust boot 314 while in the collapsed mode, and dragging it outward (away from the cover 304) to expose the retainer 316 and boot 314 separately from the cover 304. However, the push rod 312 would remain collapsed inward to the boot 314 and retainer 316. In an alternative implementation, when the user grabs an intervening part for an expansion process away from a center point, all parts on the same axis will also automatically expand. In yet another implementation, only the first part next to the drag point, but away from center point, will expand out with the other expanded parts. It is to be appreciated by one skilled in the art that other variations on the expansion and collapse of parts associated with drag points can be implemented.

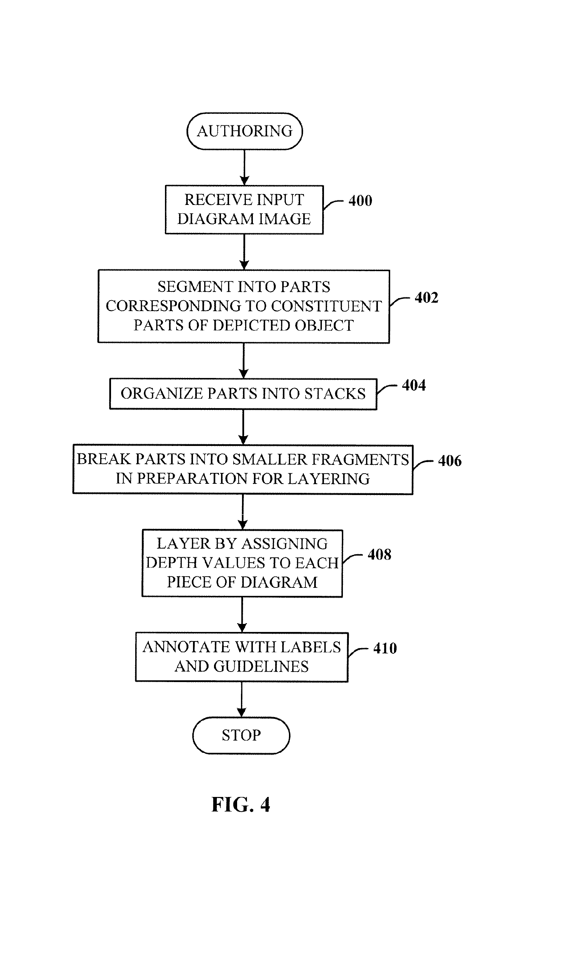

Referring now to FIG. 4, there is illustrated a flow chart of an authoring process for converting a static 2D exploded view of the diagram into an interactive diagram in accordance with the present invention. Several steps are involved in creating an interactive image-based diagram. At 400, a 2D input image is received at the input. As input, the system accepts either a single image of an object with all of its constituent pieces visible (i. e., in a fully exploded state), or a set of images, one per piece. At 402, the input diagram is segmented into parts. In one implementation, an assumption is made that the object is rendered using an orthographic projection, as is typical in technical illustrations. However, perspective projections can also be processed in accordance with the present invention to provided expansion and collapse of the parts. lf needed, images of perspective projections can be warped appropriately. In the case where a single image is used as input, the static diagram is first segmented into parts corresponding to the constituent pieces of the depicted object. At 404, the parts are organized into stacks. Stacks define how parts move relative to one another as the object is expanded and collapsed. At 406, the parts are broken down into fragments in preparation for layering. At 408, the parts and fragments are layered by assigning depth values to each part such that the parts properly occlude one another. At 410, the user adds desired annotations to the parts, such as labels and guidelines. The process then reaches a Stop block.

As previously indicated, a diagram, as processed in accordance with the present invention, consists of parts and stacks. Each part includes an image of its corresponding component, as well as an alpha mask that defines its bounding silhouette. To achieve the correct impression of relative depth between the various portions of the object, parts are also assigned depth values that determine how they are layered. When two or more parts interlock such that they cannot be correctly rendered (using, *e.g.,* a "painter's algorithm") it is insufficient to assign a single depth value to each part. To solve this problem, parts are divided into fragments. By specifying the appropriate depth value for each fragment, the correct occlusion relationship can be achieved between parts that overlap in complex ways.

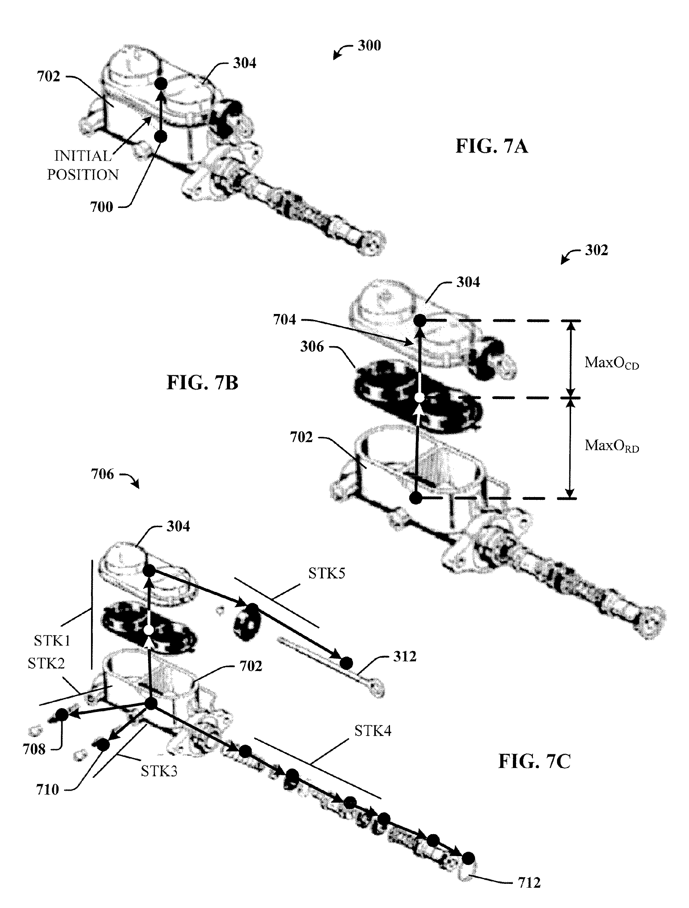

To enable parts to expand and collapse dynamically, they are organized into stacks that define how the parts are allowed to move in relation to one another. More precisely, a stack is an ordered sequence of parts that share the same explosion axis. The explosion axis is a vector that specifies a line along which stack parts can move. The first part in a stack is referred to as its root. In one implementation, each part can be a non-root member of only one stack. However, the same part can be the root for any number of stacks. Thus, a collection of stacks forms a tree, as is illustrated hereinbelow with respect to FIG. 7A-C.

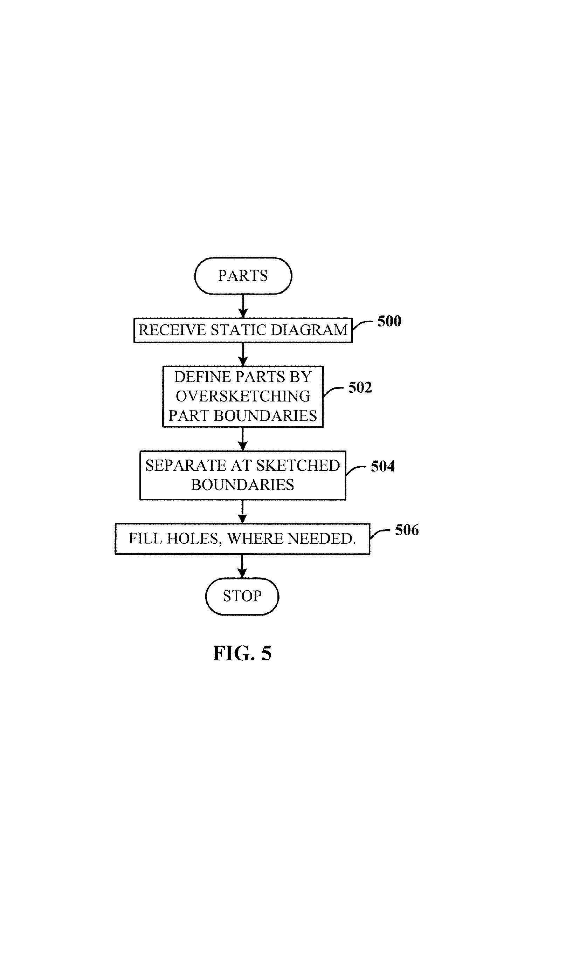

Referring now to FIG. 5, there is illustrated a flowchart for creating parts in accordance with the present invention. At 500, the static diagram is received at the input of the system. To help the user segment a single static illustration into parts, the authoring system includes an intelligent cutting tool that makes it easy to cut out the individual components of the depicted object. The user simply loads the input image into the interface and then oversketches the appropriate part boundaries using cutting tool. Thus, at 502, parts are defined by oversketching part boundaries. At 504, the parts can then be separated at the sketched boundaries. In some cases, a component that is partially occluded in the input illustration might have holes in it that need to be filled. At 506, the holes are filled, as needed. This can either be done manually using a conventional graphics package, or *via* automatic hole-filling techniques. The process then reaches a Stop block.

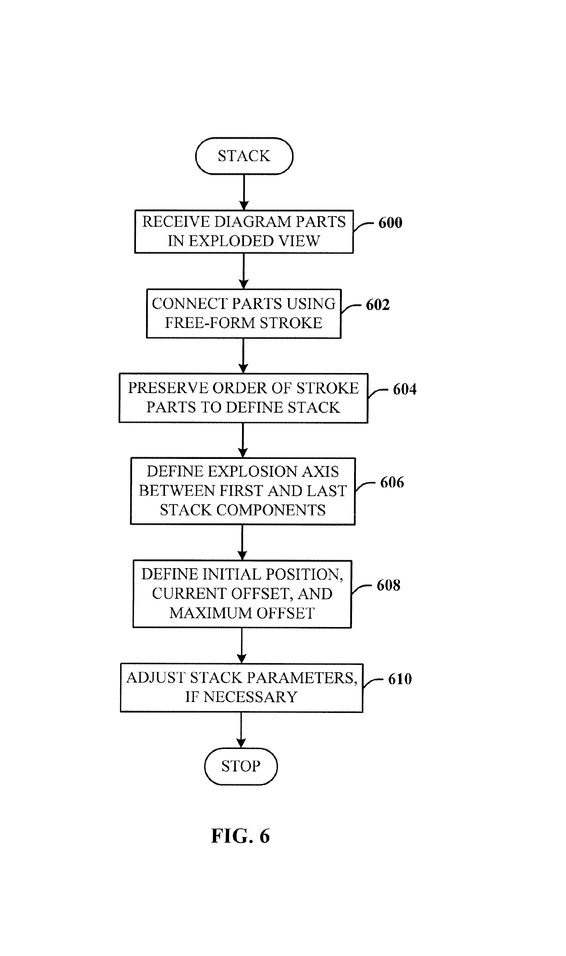

Referring now to FIG. 6, there is illustrated a flow chart for one implementation of a stacking process in accordance with the present invention. After the parts have been created, they can be organized into stacks *via* a sketch-based interaction. At 600, parts are received in an exploded view. To create a new stack, the user connects the appropriate set of parts by drawing a free-form stroke, as indicated at 602. At 604, these components are then organized into a stack, preserving the part order defined by the stroke. At 606, the system assumes that the specified parts are currently in their fully exploded configuration, and then infers an explosion axis. To determine the explosion axis, the system connects centers of a bounding box of each of the first and last stack components with a straight line. At 608, the system defines the initial position, current offset, and maximum offset for the new stack that are consistent with this layout. The initial position for each part is set by default to be a small offset from its predecessor part along the explosion axis. Since the parts start out in their fully exploded layout, the system sets the maximum offset for each part to be the distance from the part's initial position to its current, fully exploded position.

At 610, the user can then manually tweak the stack parameters *via* a number of direct-manipulation operations once the new stack is created. For example, to modify the explosion axis, the user drags out a line anchored at the stack's root, and then adjusts this vector to the desired direction. The stack's axis updates interactively during this operation so that the user can easily see how the parts align. To change a part's initial position and maximum offset, the user switches to a direct-manipulation mode, and then drags the component to its appropriate fully collapsed and expanded positions.

Figures 7A-7C illustrate a tree of various stacks and parameters that are generated for some assemblies of the master cylinder system 300 of FIG. 3A-3C. FIG. 7A illustrates the initial position of the reservoir cover 304 relative to a center point 700 of the root part that is a housing 702 of the master cylinder 300 of FIG. 3A. The initial position specifies the position of a part in its fully collapsed state with respect to its predecessor part. FIG. 7B illustrates the maximum offset stack parameter using the expanded master cylinder 302 of FIG. 3B. The maximum offset is the furthest distance a part can move with respect to its predecessor. Here, the cover 304 is expanded to illustrate its maximum offset (MaxO_{CD}) from the diaphragm 306, and the diaphragm 306 is expanded to illustrate its maximum offset (MaxO_{RD}) from the housing 702, both along an explosion axis 704 defined by both corresponding vectors.

FIG. 7C illustrates a stack hierarchy for an expanded master cylinder 706. For each of its constituent parts, the stack stores three parameters: the initial position; the current offset, that keeps track of the part's current displacement from its initial position; and, the maximum offset, which indicates how far a part can possibly move away from the preceding part in the stack. Given these stack parameters, the position of each part depends only on the position of its predecessor.

There are five stacks (STK1-STK5) illustrated, where arrows indicate the ordering of the parts within each stack. A first stack (STK1) is defined from the housing 702 *(i.e.,* the root part) to the reservoir cover 304. A second stack (STK2) is defined from the housing 702 to a check valve 708. A third stack (STK3) is defined from the housing 702 to a second check valve 710. A fourth stack (STK4) is defined from the housing 702 to a secondary cup 712. A fifth stack (STK5) is defined from the reservoir cover 304 to the push rod 312.

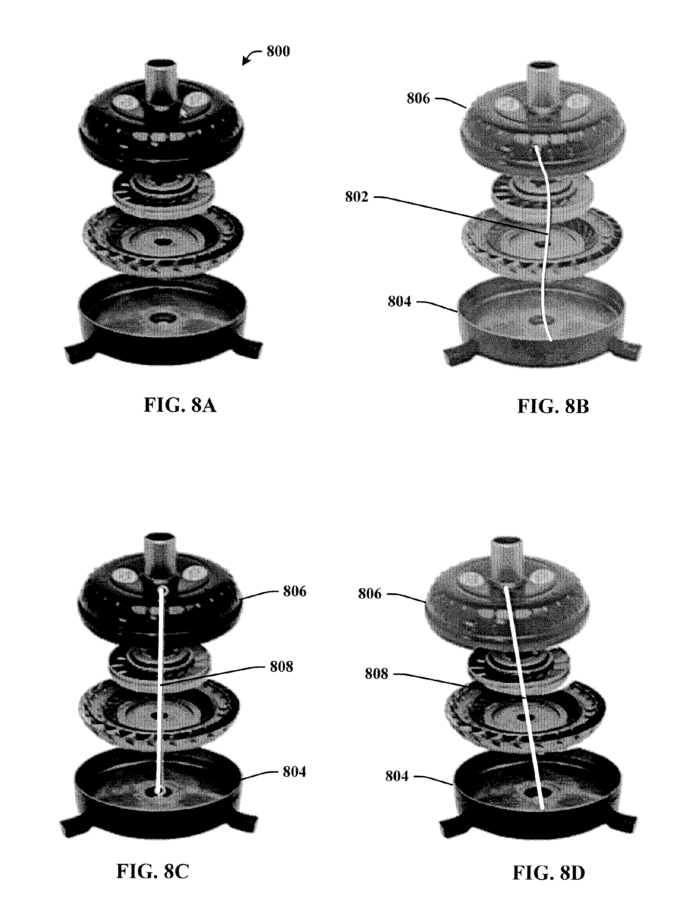

Figures 8A-8D illustrate various aspects of defining parts order and an explosion axis using free-form stroke in accordance with the present invention. FIG. 8A illustrates an assembly breakout 800 of a catalytic converter. FIG. 8B illustrates the free-form stroke 802 drawn from a bottom part 804 to a top part 806. The free-form stroke is drawn to organize a set of parts into a stack. FIG. 8C indicates that the system processes the stroke 802 as a straight-line explosion axis 808 from the center of the bounding box of the bottom part 804 to the center of the bounding box of the top part 806. The stroke directly indicates the order of the parts in the stack, as well as the explosion axis 808. FIG. 8D illustrates that the user can then interactively adjust the explosion axis 808, if necessary. Here, the user adjusts the axis 808 such that the center point of the top part 806 moves left of the center of the bottom part 804.

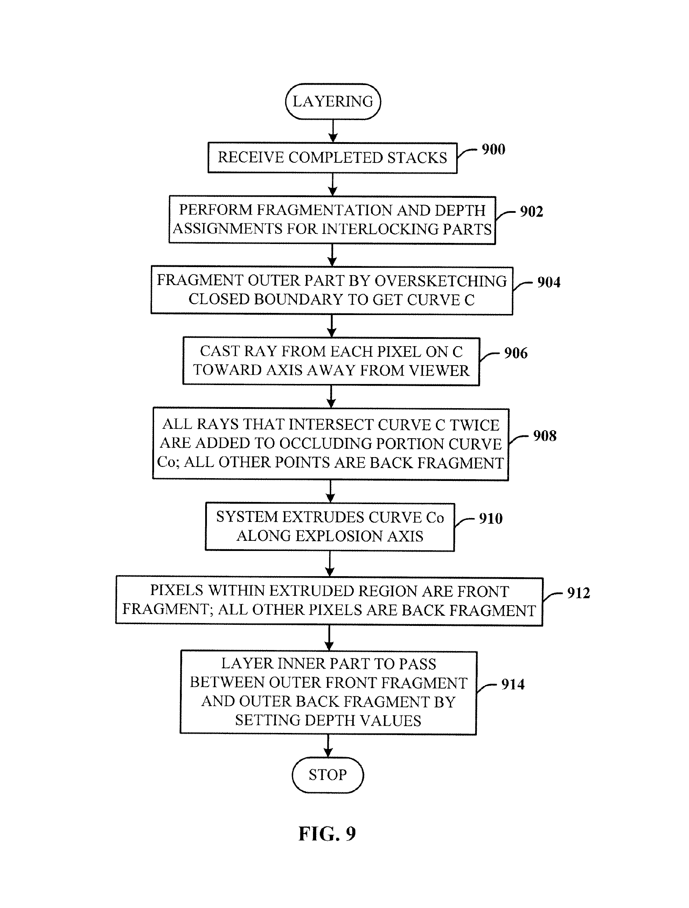

Referring now to FIG. 9, there is illustrated a flow chart of one process for layering in accordance with the present invention. After all of the stacks have been created, parts are fragmented, if necessary, and then layered to produce the correct impression of relative depth between them. At 900, the stacks have been generated. At 902, fragmentation is performed, and depth assignments are made for interlocking parts. The outer part is then split into front and back fragments. At 904, the outer part is fragmented by oversketching the closed boundary to generate a curve C. At 906, a ray is cast from each pixel on curve C toward any axis away from the viewer. At 908, all rays that intersect curve C twice are added to the occluding portion of the occluding curve C₀. At 910, the system extrudes curve C₀ along the explosion axis. At 912, pixels within the extruded region are assigned to the front fragment. All other pixels are assigned to the back fragment. At 914, the inner part is layered to pass between the outer front fragment and the outer back fragment by setting corresponding depth values. The process then reaches a Stop block.

The user can manually partition a part into fragments with the cutting tool, and then explicitly assign a depth value to each part or fragment in the diagram. However, for objects with more than a few components, this type of manual layer specification can be tedious. To reduce the authoring burden, the disclosed architecture system provides semi-automatic fragmentation and depth assignment tools that can be used for a large class of interlocking parts.

### SEMI-AUTOMATIC FRAGMENTATION

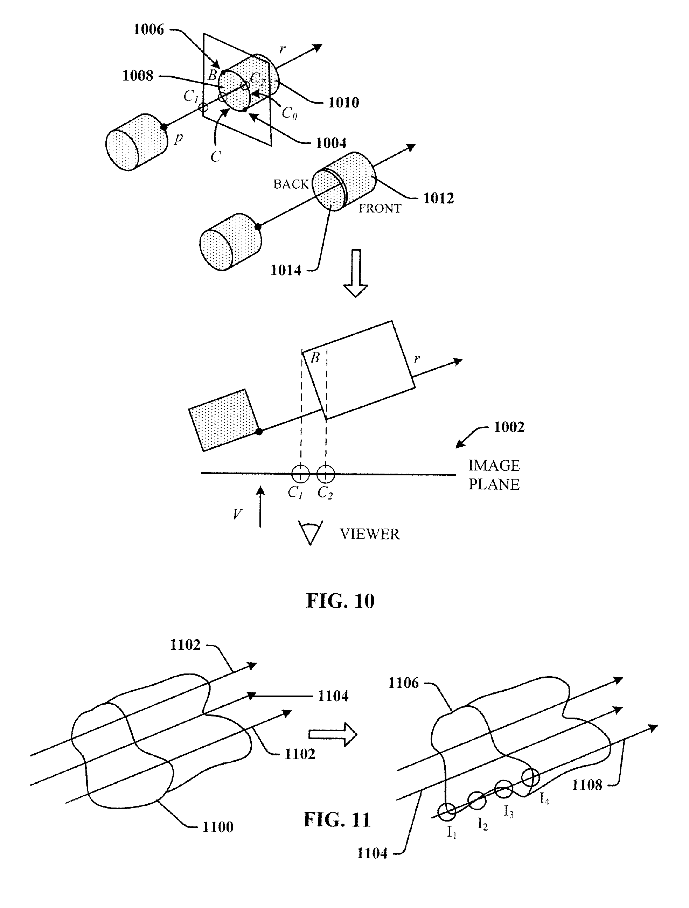

Referring now to FIG. 10, there is illustrated a geometric representation of the semi-automatic fragmentation tool in accordance with the present invention. Typically, when two parts interlock, one component fits roughly inside the other. In this case, the correct layering can usually be achieved by splitting the outer part into front and back fragments, and then layering the inner part to pass between them. To fragment the outer part, the user oversketches (with help from the cutting tool) the closed boundary 1000 of the cavity or opening that encloses the inner piece. As shown in FIG. 10, the 3D boundary of the cavity is referred to as *B.* A curve *C* that the user draws is also *B's* projection onto an image plane 1002. Given curve C, the system computes the occluding portion *C*ₒ of this curve *C,* which occluding portion *C*_{*o*} is defined to be between a first point 1004 on the boundary *B,* and a second point 1006 on the boundary *B*. This also defines where an inner part 1008 passes behind an outer part 1010. The system then uses the occluding curve C₀ to divide the enclosing component into two fragments (a front fragment and a back fragment).

The system extracts curve *C*_{*0*} by determining, for any 3D point p that extends through the opening, where *p* passes behind *B* (*i.e.*, out of the viewer's sight). Since parts are constrained to move within their stacks, only points that go through the opening while traveling in the explosion direction r are considered.

Referring briefly to FIG. 11, there is illustrated a restriction that can be employed in accordance with the present invention. The system can assume that curve *C***,** here, curve 1100 does not self-intersect, and that any line 1102 parallel to an explosion axis 1104 intersects curve *C* no more than twice. A curve 1106 does not meet this restriction, in that, a line 1108 parallel to the explosion axis 1104 intersects the curve 1106 four times, as indicated at intersection points I₁, I₂, I₃, and I₄.

Referring again to FIG. 10, given this restriction on the shape of curve *C,* and ignoring tangent cases, the projection of *r* onto the image plane 1002 will intersect curve *C* exactly twice (at points *C*_{*1*} and *C*_{*2*}*).* Let *C*_{*1*} be the first intersection point following r away from the viewer. By default, it is assumed that p passes in front of *B* at *C*_{*1*} and behind *B* at *C*_{*2*}*,* which corresponds to the common case in which p enters the opening defined by B as it moves away from the viewer. Given this assumption, FIG. 10 depicts the basic steps for computing occluding curve *C*_{*0*}*.* The user specifies which end of the explosion axis points away from the viewer. Consider the path of every point that passes through *B* by casting a ray from every pixel on *C* in the explosion direction. If the ray intersects C again, the pixel corresponding to this second intersection point is added to occluding curve *C*_{*0*}. Once curve processing has completed, occluding curve *C*_{*0*} is extruded by rasterizing a line of pixels in the explosion direction, starting from each pixel on the boundary B. Every pixel encountered is added to the part's front fragment 1012, and all remaining pixels comprise the back fragment 1014. Extrusion is stopped once the boundary of the image is reached.

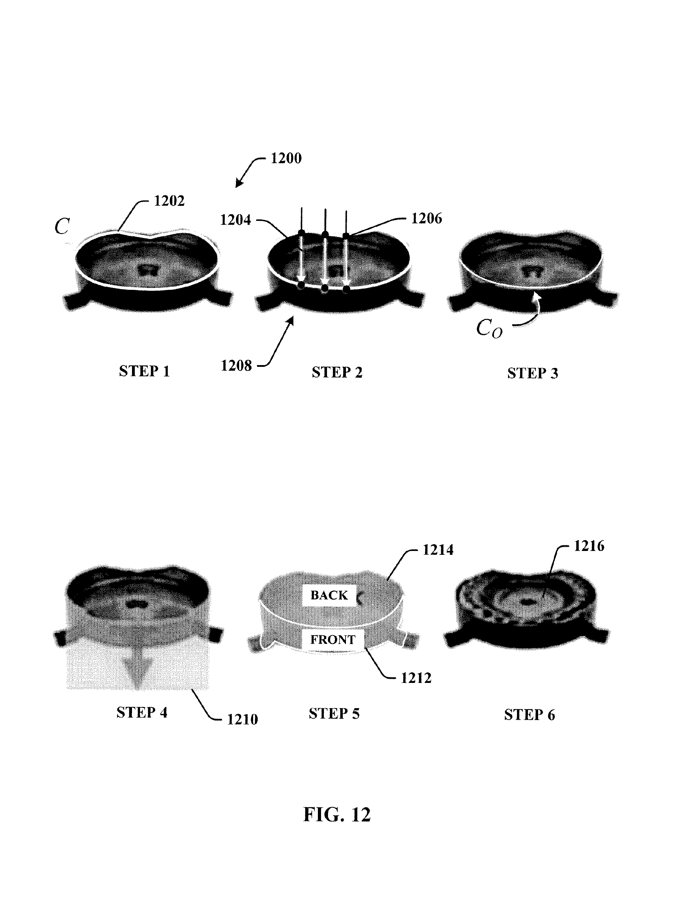

Referring now to FIG. 12, there is illustrated the semi-automatic fragmentation process for a cover 1200 of the transmission assembly of FIG. 8A. The user first oversketches the boundary cavity with a curve C (also denoted curve 1202) using the cutting tool to generate the curve 1202. The system then casts rays 1204 from each pixel 1206 on the curve *C* in the direction of the explosion axis that points away from the viewer. For all rays 1206 that intersect curve *C* twice, the second points of intersection 1208 are added to the occluding portion *C*_{*0*} of the curve *C.* The system extrudes occluding curve *C*_{*0*} along the explosion axis. All pixels lying within the extruded region 1210 are classified as the front fragment 1212 and the remaining pixels are classified as the back fragment 1214. The system can now set the depth values of the turbine 1216 to lie between the depth values of the front fragment 1212 and back fragment 1214 to produce the correct occlusion relationship. Note that the assumptions produce correct fragmentations for a whole class of enclosing cavities of different shapes and orientations. Specifically, the assumptions do not restrict B to lie in a plane that is orthogonal to the explosion direction.

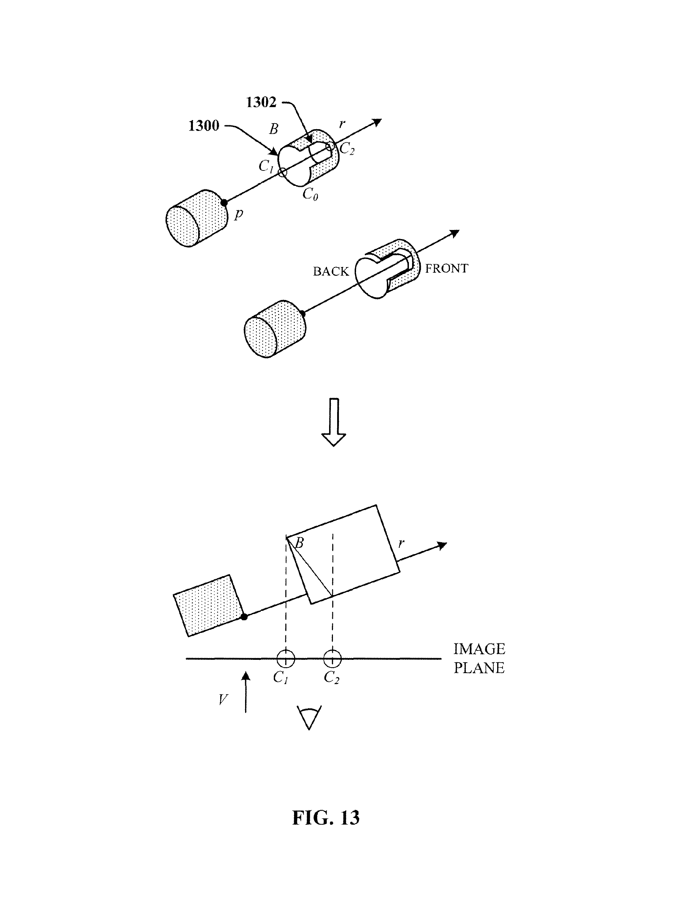

Referring now to FIG. 13, there is illustrated an example of a cavity 1300 with a non-planar opening. In this situation, the system computes the correct fragmentation because all of the assumptions hold. The opening defined by B has the notch 1302 that causes B to be non-planar. As long as *p* always passes in front of B at *C*_{*1*} for all pairs of intersection points *C*_{*1*} and *C*_{*2*}, the fragmentation algorithm obtains the correct result.

The default fragmentation assumptions are valid for a large class of interlocking parts. However, if B is oriented such tha *p* emerges from behind *C*_{*1*} and passes in front of C₂, then the fragmentation assumptions do not hold. Without any user intervention, the system computes an incorrect fragmentation. A top-down view of the scene would clearly illustrate that B is in front of r at *C*_{*1*}*.* To obtain the correct results, however, the user can manually indicate to the system to invert the fragmentation computation, which can be done simply by reversing the explosion direction in the fragmentation algorithm.

### SEMI-AUTOMATIC DEPTH ASSIGNMENT

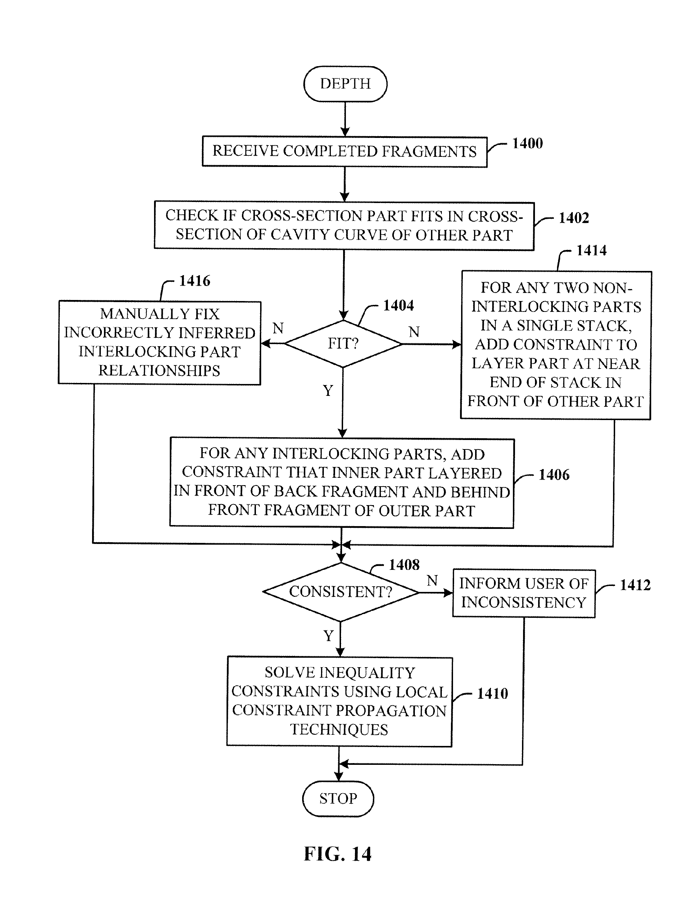

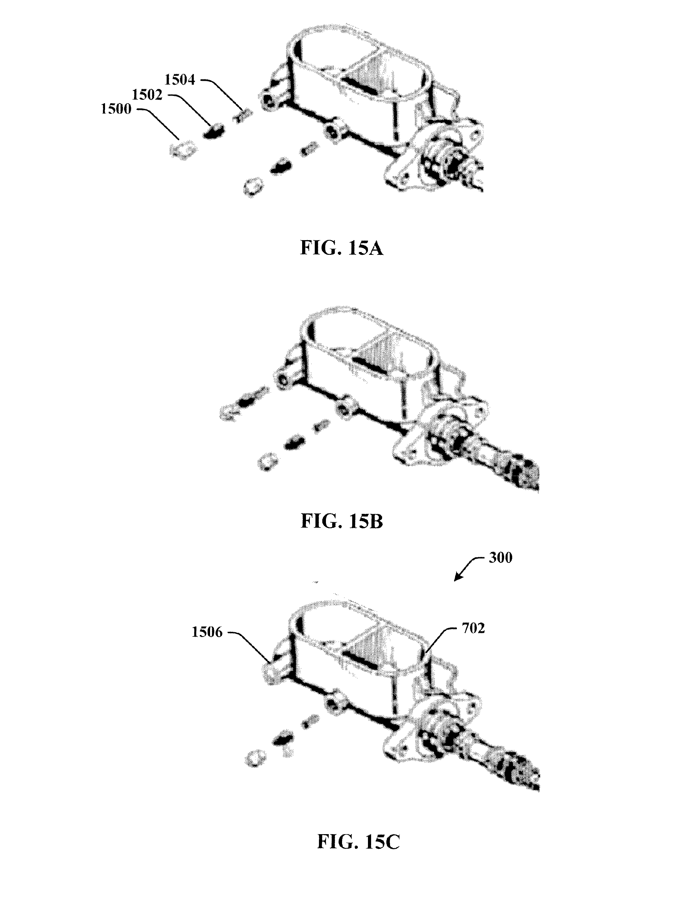

Referring now to FIG. 14, there is illustrated a flow chart of one implementation of the semi-automatic depth assignment tool in accordance with the present invention. In general, non-adjacent parts in a stack can overlap, such as in FIG. 15A-C. As a result, depth values cannot be propagated outwards from the root in a single pass. Depth assignment then becomes a constraint satisfaction problem. Once all of the appropriate parts have been fragmented, the user can request that the system infer part layers. At 1400, the system receives completed fragments for processing. For all pairs of parts, to determine whether the pairs interlock, the system employs a heuristic. At 1402, a check is made to determine if the cross-section of one part (with respect to the explosion direction) fits within the cross-section of the curve that defines the cavity opening (if there is one) in another part. At 1404, the system determines if there is a fit in the part cross-sections. A number of constraint processes can be employed to address fit situations. At 1406, for any interlocking parts, a constraint is added that the inner part is layered in front of the back fragment and behind the front fragment. At 1448, a determination is made if the interlocking relationships are consistent. If YES, at 1410, the system of inequality constraints is solved using local constraint propagation techniques. The process then reaches a Stop block. If, however, the relationships are not consistent, flow is from 1408 to 1412, to inform the user of the inconsistency.

At 1404, if there is not a fit, flow is to 1414 to consider any two non-interlocking parts. For non-interlocking parts, it is assumed that their depth values are either strictly increasing or decreasing when considering them in stacking order. Thus, for any two non-interlocking parts in a single stack, the constraint is added to layer the part at the near end of the stack in front of the other part. Flow is then to 1408 to again perform the consistency checks, as previously described.

As indicated previously, the user can request that the system infer part layers from fragmented parts. Although this heuristic works in most cases, there are situations in which it could fail. For example, the heuristic could fail where an inner part contains a bulbous end that does not fit within an outer part. In order to handle such situations, the user can manually intervene to specify the correct interlocking relationships, as indicated in flow from 1404 to 1416. For example, the user could fragment a bulbous part so that the cross-section assumption holds for the fragment that actually fits into the enclosing component. Flow is from 1416 to 1408 to again perform the consistency checks, as previously described.

FIG. 15A-C illustrate that multiple parts in a stack can interlock. FIG. 15A illustrates three interlocking parts 1500, 1502, and 1504 that are expanded along an explosion axis. FIG. 15B illustrates the partial collapse of the interlocking parts. FIG. 15C illustrates total collapse of the interlocking parts in a port 1506 of the housing 702 of the master cylinder 300. In this case, the algorithm correctly infers the depth for all of the parts, since all af the assumptions of the semi-automatic depth assignment algorithm hold. Namely, the cross-section assumption holds, it is true that all non-interlocking parts in the stack can be layered in order with the parts closer to the near end of the stack on top with no visual artifacts, and it is also true that an inner part that interlocks with an outer part can be layered between the outer parts front and back fragments, again with no visual artifacts.

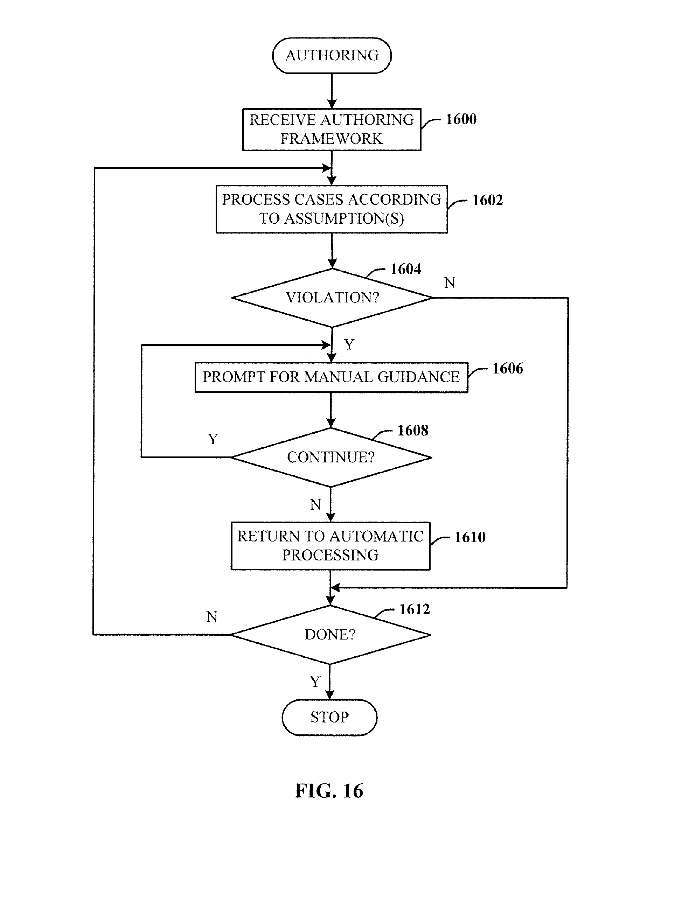

Referring now to FIG. 16, there is illustrated a flow chart of one implementation of the authoring process where one or more assumptions are violated. Since the system is organized as a collection of semi-automatic tools, it does not force the user to choose either a fully automatic process or a completely manual interaction. Instead, the system can fluidly accept manual guidance at any stage in the authoring process. At 1600, the system receives the authoring framework. At 1602, the system processes cases according to predetermined assumptions. At 1604, the system determines if a violation has occurred. If Yes, at 1606, the system prompts the user for manual guidance. For instance, if the system is unable to find the proper fragments because one of the fragmentation assumptions is invalid, the user can manually divide a part into front and back pieces and then use the automatic depth assignment tool to infer a layering. Similarly, if the system guesses incorrectly whether or not two parts fit together, the user can first explicitly specify the correct interlocking relationship and then use the system's constraint solver to assign depth values. At 1608, the system determines if manual processing should continue. If Yes, flow is back to 1606. If No, flow is to 1610 to return to automatic processing. At 1612, the system determines if processing has completed for that case. If No, flow is back to 1602. However, if processing has completed for that case, flow is to a Stop block. If no violation has occurred, flow is from 1604 to 1612 to determine if processing has completed.

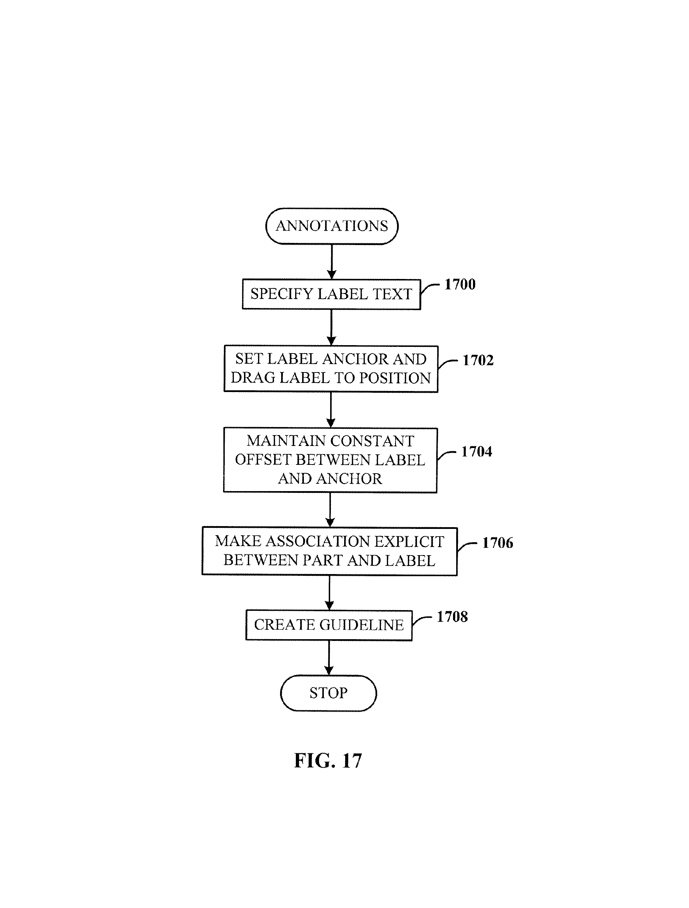

Referring now to FIG. 17, there is illustrated a flow chart for one implementation for annotation in accordance with the present invention. As an optional final step, the user can annotate individual parts with labels and add guidelines that indicate explicitly how parts move in relation to one another. At 1700, for each part that requires a label, the user specifies the appropriate label text. To indicate where a label should be placed, the user clicks to set an anchor point (typically on or near the part being labeled), and then drags the label to the desired position, as indicated at 1702. When the diagram is laid out, the system ensures the offset between the label and its anchor remains constant so that the label moves rigidly with its corresponding part, as indicated at 1704. At 1706, the system renders a line from the center of the label to its anchor point to make the association between a part and its label explicit. At 1708, the user creates a guideline by selecting two parts and then dragging out a line that connects the two parts in the desired fashion. Each endpoint of the line is treated as an anchor that sticks to its corresponding part. As a result, the guideline adapts appropriately as the parts move. By default, guidelines are rendered as dotted lines. The process then reaches a Stop block.

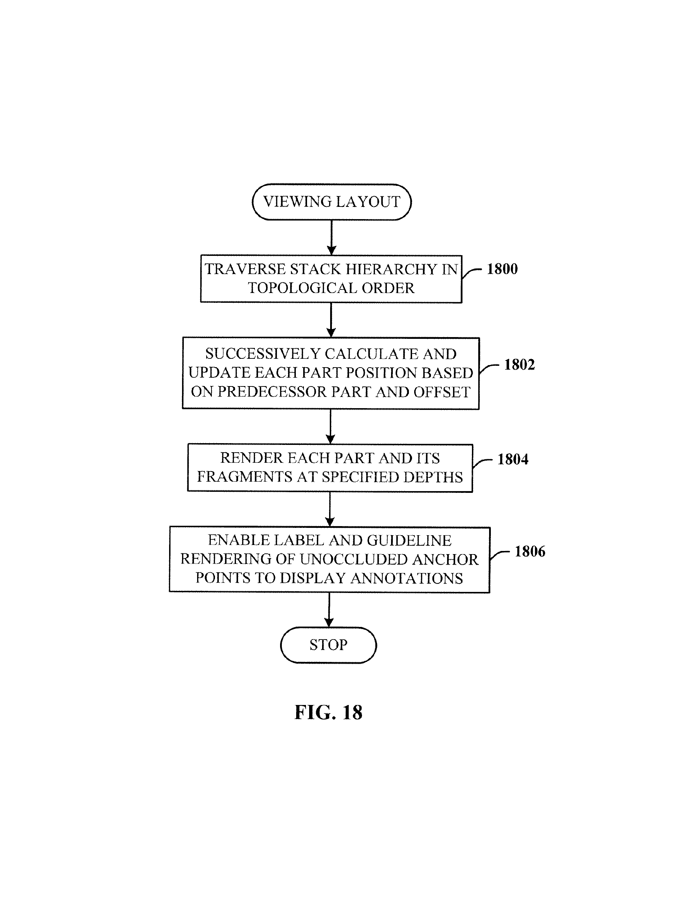

Referring now to FIG. 18, there is illustrated a flow chart of one process for viewing a layout in accordance with the present invention. To display dynamic exploded view illustrations, a software tool is provided that supports a number of useful interactions to help the human viewer extract information from the diagram. A local propagation algorithm is employed to lay out the parts of the diagram. At 1800, the algorithm works by traversing the stack hierarchy in topological order. At 1802, the algorithm then successively calculates and updates the position of each part based on its predecessor and current offset. Although local propagation cannot handle cycles, this is not an issue because the stack hierarchies form a tree, as mention hereinabove. Once all part positions have been calculated, the system renders each part and its fragments at their specified depths, as indicated at 1804. At 1806, the user can also enable label and guideline rendering in the viewing interface to display annotations. The process then reaches a Stop block. To prevent visual clutter, the system only renders labels and guidelines whose anchor points are unoccluded by other parts.

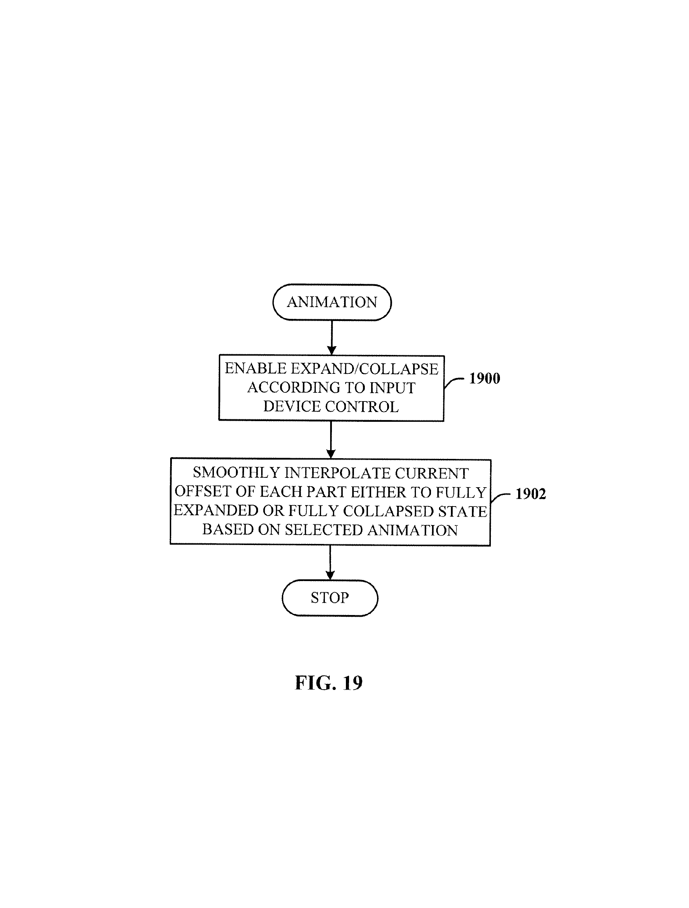

Referring now to FIG. 19, there is illustrated a flow chart of one process for animation expansion and collapse. The viewing program supports a simple but useful interaction that allows the viewer to expand or collapse the entire diagram with the click of a button. Thus, at 1900, the user performs this function according to input device control. To produce the desired animation, the system smoothly interpolates the current offset of each part either to its fully expanded or fully collapsed state, depending on which animation the user selects, as indicated at 1902. The process then reaches a Stop block.

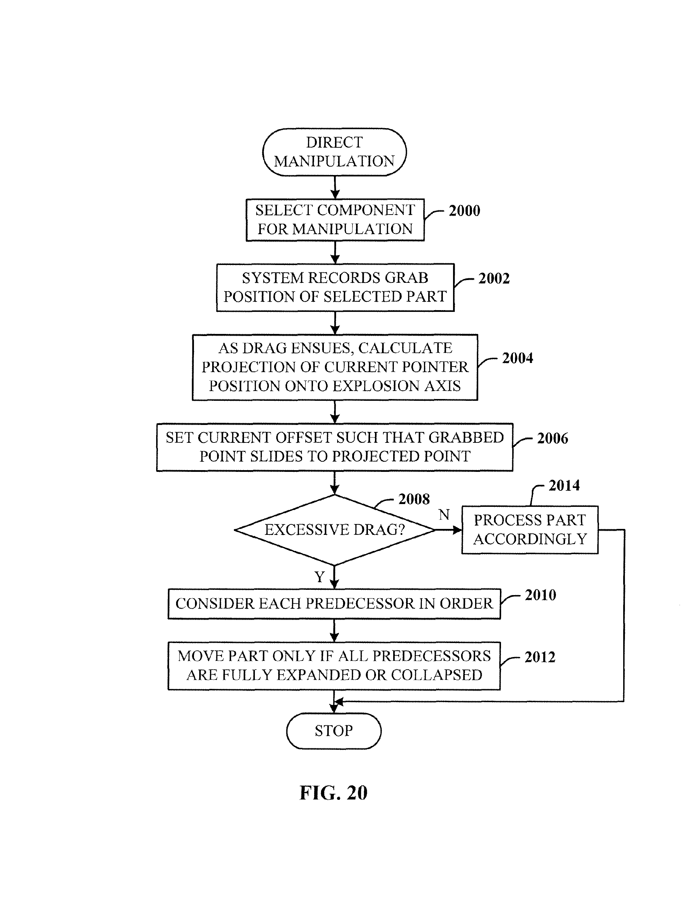

Referring now to FIG. 20, there is illustrated a flow chart of a direct manipulation process in accordance with the present invention. To enable the human viewer to focus on the interactions and spatial relationships between a specific set of parts without seeing all of an object's components in exploded form, the disclosed architecture allows the user to selectively expand and collapse portions of the diagram via constrained direct manipulation. At 2000, the user selects a component for manipulation. After selecting a component, the viewer can interactively modify its current offset by dragging the part outwards or inwards within its stack. The manipulation is constrained because a part can only move along its explosion axis, no matter where the user drags. When the user initiates this interaction, the system first records where the selected part is grabbed, as indicated at 2002. At 2004, as the user drags, the system calculates the projection of the current pointer location onto the explosion axis. At 2006, the system then sets the current offset of the selected part such that the grabbed point slides towards this projected point. At 2008, the system determines if the user has exceeded the drag capabilities. If the user drags a part beyond its fully collapsed or expanded state, the system tries to modify the current offsets of the predecessor parts to accommodate the interaction. Each predecessor is considered in order until the root is reached, as indicated at 2010. For each predecessor part, at 2012, the system moves the predecessor part to accommodate the user's dragging, as long as the predecessor part has not exceeded its drag capabilities. If the predecessor part has exceeded its drag capabilities and the grabbed point on the selected part has still not reached the projected point specified by the user's dragging, then the next predecessor part is considered. Thus, a predecessor part will only be moved if all of its descendants (up to the manipulated component) are either fully collapsed or expanded. The process then reaches a Stop block. Thus, the user can effectively push a set of parts together or pull them apart one by one. If no excessive drag has been detected, flow is from 2008 to 2014 to process the parts accordingly. Flow is then to the Stop block.

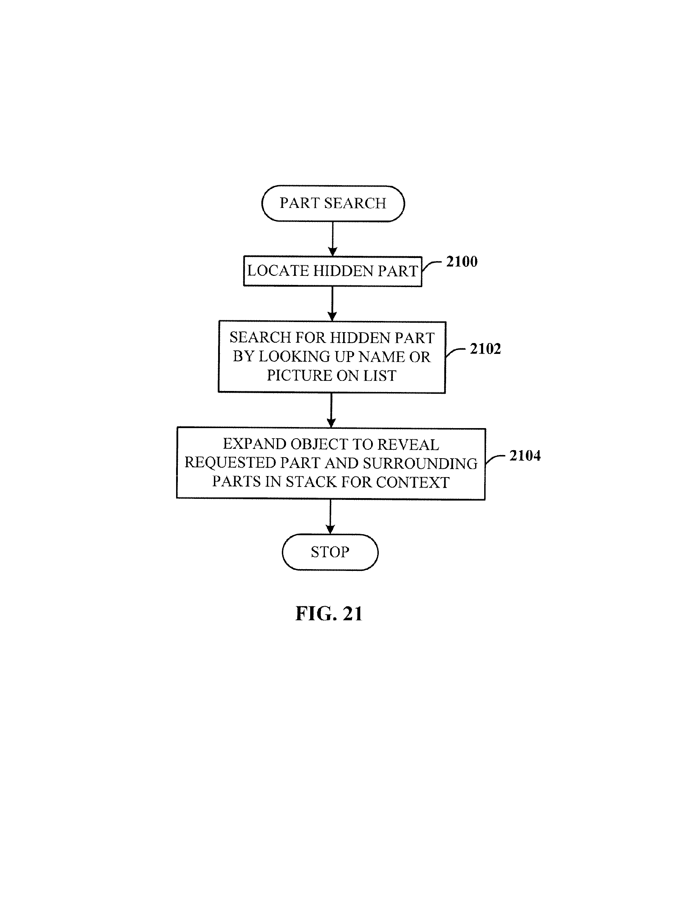

Referring now to FIG. 21, there is illustrated a flow chart of a process for a part search in accordance with the present invention. In some cases, the viewer may want to locate a part that is hidden from view when the object is in its fully collapsed state, as indicated at 2100. At 2102, instead of expanding the entire diagram and then searching visually for the component in question, the disclosed architecture allows the user to search for a part by looking up its name or picture in a list of all the object's components. At 2104, the viewing software expands the object to reveal the requested part as well as the parts immediately surrounding it in the stack in order to provide the appropriate context. The process then reaches a Stop block.

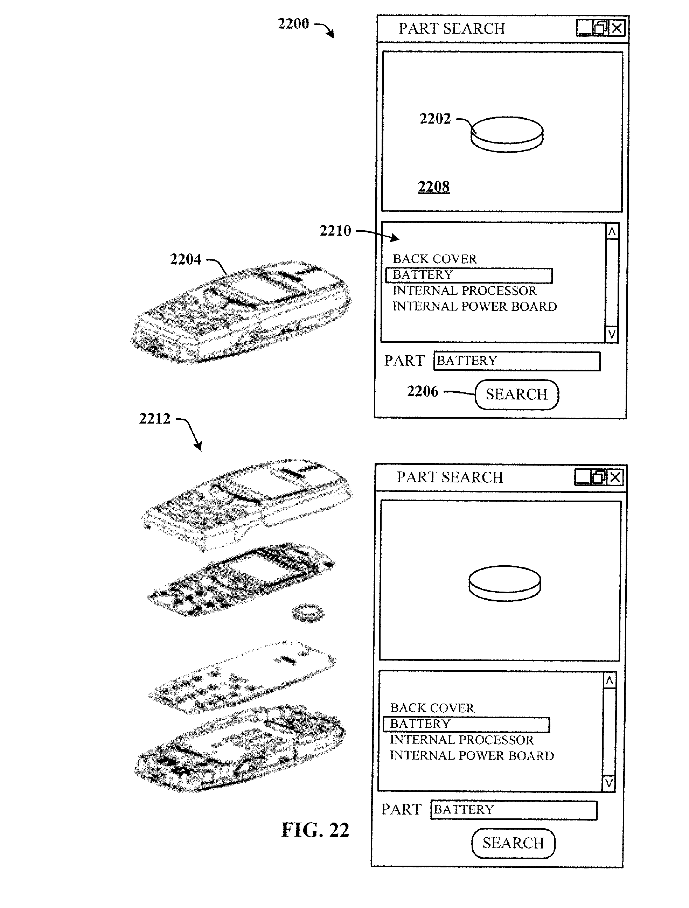

Referring now to FIG. 22, there is illustrated a part search operation in accordance with the present invention. The system provides a search window 2200 to facilitate finding the hidden component. Here, the user chooses to find a hidden part that is a speaker 2202 of a device 2204. After entering labels for all components, the system stores the labels in a format that is easily presented and searchable. Here, the user enters the term "speaker" into a search field and selects a Search button 2206. The system graphically presents the speaker part in an upper portion 2208 of the search window 2200. Alternatively, the window 2200 provides a means whereby the user can scroll down a list 2210 of labels (that can be sorted in alphabetical order, for example) to the label "speaker", and select it. In response thereto, the system automatically expands the device 2204 to provide an exploded view 2212 along an explosion axis to show the relative position of the hidden speaker 2202 among the device parts.

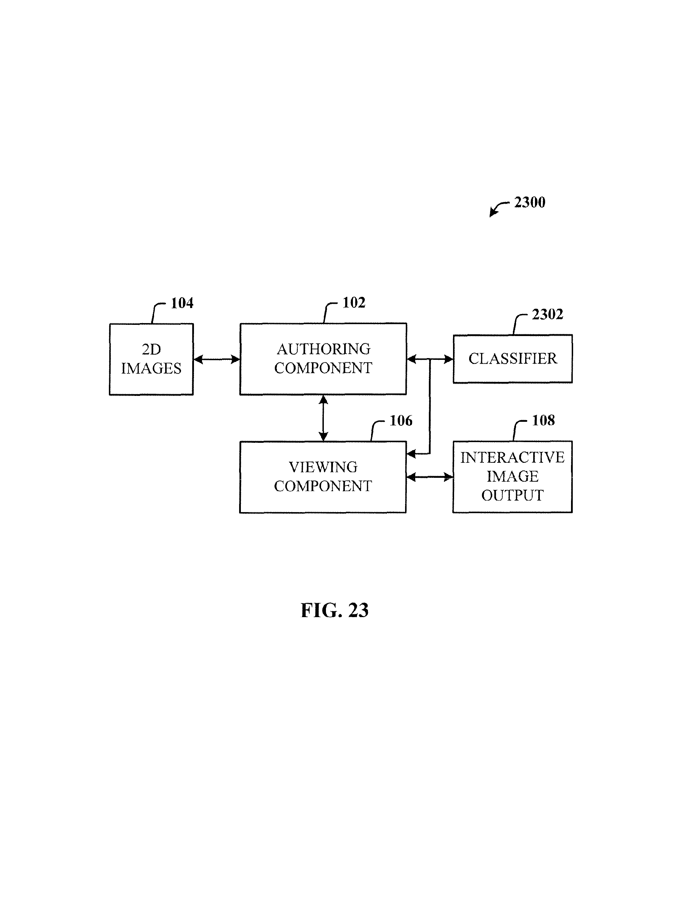

Referring now to FIG. 23, there is illustrated the system of FIG. 1 further employing artificial intelligence in accordance with one implementation of the present invention. The subject invention can employ various artificial intelligence based schemes for carrying out various aspects of the subject invention. For example, a process for determining depth values for parts can be facilitated *via* an automatic classifier system and process 2302.

A classifier is a function that maps an input attribute vector, x = (x1, x2, x3, x4, *xn),* to a confidence that the input belongs to a class, that is, f(x) *= confidence (class).* Such classification can employ a probabilistic and/or statistical-based analysis {*e.g.*, factoring into the analysis utilities and costs) to prognose or infer an action that a user desires to be automatically performed.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that is near, but not identical to training data. Other directed and undirected model classification approaches include, *e.g.*, naïve Bayes, Bayesian networks, decision trees, and probabilistic classification models providing different patterns of independence can be employed. Classification as used herein also is inclusive of statistical regression that is utilized to develop models of priority.

As will be readily appreciated from the subject specification, the subject invention can employ classifiers that are explicitly trained *(e.g., via* a generic training data) as well as implicitly trained *(e.g.,* via observing user behavior, receiving extrinsic information). For example, SVM's are configured *via* a learning or training phase within a classifier constructor and feature selection module. Thus, the classifier(s) can be used to automatically perform a number of functions, including but not limited to determining according to a predetermined criteria or learning processes how parts are to be stacked, what parts are part of a stack, what and how a part is to be fragmented, what annotation is associated with a part, how the part is annotated, employing and updating user preferences when working with the authoring and viewing components, processing interlocking parts, and so on.

In one implementation, the architecture of the present invention can be configured to accommodate arbitrary explosion paths. To achieve a more compact exploded view layout, illustrators sometimes arrange parts using non-linear explosion paths that are often indicated with guidelines. The disclosed constraint-based layout framework facilitates extending support to arbitrary, user-specified explosion paths.

In another implementation, dynamic annotations can be employed. In support thereof, the system determines how to arrange this meta-information dynamically to take into account the changing layout of an interactive diagram.

The architecture of the present invention supports parts emphasis and de-emphasis. In another implementation, it is useful to provide diagram authors with image-based tools for emphasizing and deemphasizing particular parts of the depicted object. These tools are similar to intelligent filters that take into account the perceptual effect of performing particular image transformations. The emphasis operations can be used at display time to highlight important parts.

In another implementation, semantic zooming is supported. For extremely complicated objects, it is useful to introduce multiple levels of detail that allow the viewer to interactively control how much information is presented for particular portions of the subject matter.

Depth cues can be supported. Interactive diagrams created from 2D images can sometimes have a "flattened" appearance where layers overlap. It is possible to automatically render simple depth cues (*e.g.,* drop shadows) when viewing the diagram to clarify the spatial relationships between these layers.

In the context of this description, "direct interaction or manipulation" refers to any user interaction that involves direct or immediate user control. Usually, this involves the user causing an object or part to be dragged, resized, or drawn with an input mechanism, for example, a mouse, trackball, or other input means. In one implementation, the system facilitates both direct manipulation (where the user can drag parts around), and indirect user interaction (where the user manipulates or exposes or hides parts or objects with the search interface and animated expand/collapse).

It is to be appreciated that direct and indirect user interaction is not limited to common input device mechanisms such as a mouse, keyboard, and thumb pad, for example, but can also employ voice controls to initiate expansion of objects, collapse of such objects, and searches for such parts or objects. When using voice control, the user will train the system according to user commands, and input such commands into a microphone for processing and execution.

In brief summary, exploded views are crucial for explaining the internal structure of complicated objects. Interactive digital diagrams are especially important for allowing the viewer to extract specific information from an illustration by dynamically modifying the way in which the subject matter is presented. The disclosed architecture describes a novel framework for creating and viewing interactive exploded view diagrams using static images as input. More specifically, a set of authoring tools is provided that facilitates the task of creating such diagrams, and a viewing program is provided that enables users to better understand spatial relationships between parts and the overall structure of the object.

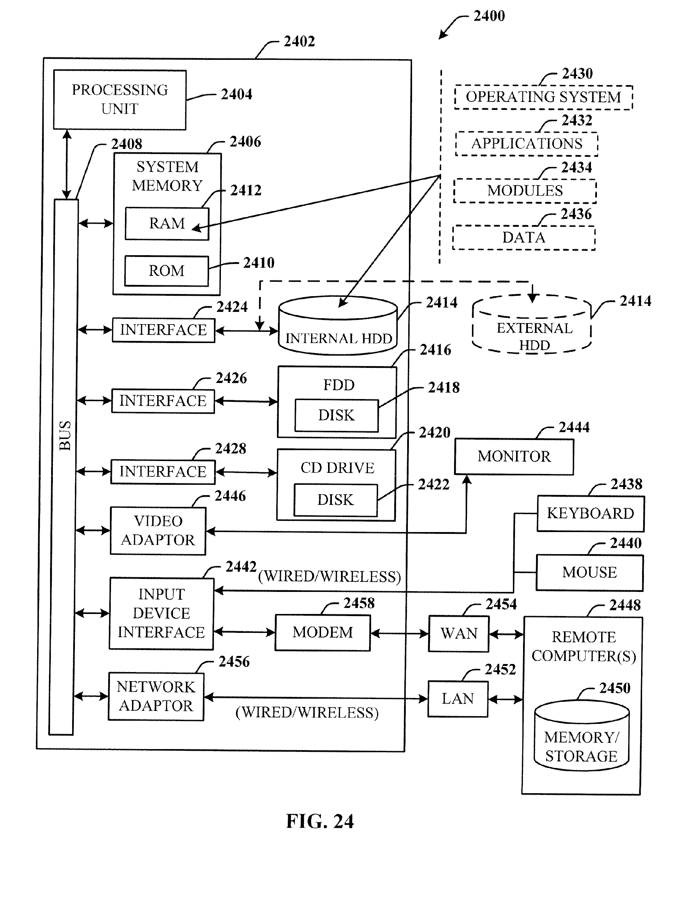

Referring now to FIG. 24, there is illustrated a block diagram of a computer operable to execute the disclosed architecture. In order to provide additional context for various aspects of the present invention, FIG. 24 and the following discussion are intended to provide a brief, general description of a suitable computing environment 2400 in which the various aspects of the present invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer readable media can comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 24, there is illustrated an exemplary environment 2400 for implementing various aspects of the invention that includes a computer 2402, the computer 2402 including a processing unit 2404, a system memory 2406 and a system bus 2408. The system bus 2408 couples system components including, but not limited to, the system memory 2406 to the processing unit 2404. The processing unit 2404 can be any of various commercially available processors. Dual microprocessors and other multi-processor architectures may also be employed as the processing unit 2404.

The system bus 2408 can be any of several types of bus structure that may further interconnect to a memory bus (with or without a memory controller), a peripheral bus, and a local bus using any of a variety of commercially available bus architectures. The system memory 2406 includes read only memory (ROM) 2410 and random access memory (RAM) 2412. A basic input/output system (BIOS) is stored in a non-volatile memory 2410 such as ROM, EPROM, EEPROM, which BIOS contains the basic routines that help to transfer information between elements within the computer 2402, such as during start-up. The RAM 2412 can also include a high-speed RAM such as static RAM for caching data.

The computer 2402 further includes an internal hard disk drive (HDD) 2414 (*e.g.*, EIDE, SATA), which internal hard disk drive 2414 may also be configured for external use in a suitable chassis (not shown), a magnetic floppy disk drive (FDD) 2416, (*e.g.*, to read from or write to a removable diskette 2418) and an optical disk drive 2420, (*e.g.*, reading a CD-ROM disk 2422 or, to read from or write to other high capacity optical media such as the DVD). The hard disk drive 2414, magnetic disk drive 2416 and optical disk drive 2420 can be connected to the system bus 2408 by a hard disk drive interface 2424, a magnetic disk drive interface 2426 and an optical drive interface 2428, respectively. The interface 2424 for external drive implementations includes at least one or both of Universal Serial Bus (USB) and IEEE 1394 interface technologies.

The drives and their associated computer-readable media provide nonvolatile storage of data, data structures, computer-executable instructions, and so forth. For the computer 2402, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the present invention.

A number of program modules can be stored in the drives and RAM 2412, including an operating system 2430, one or more application programs 2432, other program modules 2434 and program data 2436. All or portions of the operating system, applications, modules, and/or data can also be cached in the RAM 2412.

It is appreciated that the present invention can be implemented with various commercially available operating systems or combinations of operating systems.

A user can enter commands and information into the computer 2402 through one or more wired/wireless input devices, *e.g.,* a keyboard 2438 and a pointing device, such as a mouse 2440. Other input devices (not shown) may include a microphone, an IR remote control, a joystick, a game pad, a stylus pen, touch screen, or the like. These and other input devices are often connected to the processing unit 2404 through an input device interface 2442 that is coupled to the system bus 2408, but can be connected by other interfaces, such as a parallel port, an IEEE 1394 serial port, a game port, a USB port, an IR interface, etc.

A monitor 2444 or other type of display device is also connected to the system bus 2408 via an interface, such as a video adapter 2446. In addition to the monitor 2444, a computer typically includes other peripheral output devices (not shown), such as speakers, printers etc.

The computer 2402 may operate in a networked environment using logical connections *via* wired and/or wireless communications to one or more remote computers, such as a remote computer(s) 2448. The remote computer(s) 2448 can be a workstation, a server computer, a router, a personal computer, portable computer, microprocessor-based entertainment appliance, a peer device or other common network node, and typically includes many or all of the elements described relative to the computer 2402, although, for purposes of brevity, only a memory storage device 2450 is illustrated, The logical connections depicted include wired/wireless connectivity to a local area network (LAN) 2452 and/or larger networks, *e.g.,* a wide area network (WAN) 2454. Such LAN and WAN networking environments are commonplace in offices, and companies, and facilitate enterprise-wide computer networks, such as intranets, all of which may connect to a global communication network, *e.g.,* the Internet.

When used in a LAN networking environment, the computer 2402 is connected to the local network 2452 through a wired and/or wireless communication network interface or adapter 2456. The adaptor 2456 may facilitate wired or wireless communication to the LAN 2452, which may also include a wireless access point disposed thereon for communicating with the wireless adaptor 2456. When used in a WAN networking environment, the computer 2402 can include a modem 2458, or is connected to a communications server on the LAN, or has other means for establishing communications over the WAN 2454, such as by way of the Intemet. The modem 2458, which can be internal or external and a wired or wireless device, is connected to the system bus 2408 *via* the serial port interface 2442. In a networked environment, program modules depicted relative to the computer 2402, or portions thereof, can be stored in the remote memory/storage device 2450. It will be appreciated that the network connections shown are exemplary and other means of establishing a communications link between the computers can be used.

The computer 2402 is operable to communicate with any wireless devices or entities operatively disposed in wireless communication, *e.g.*, a printer, scanner, desktop and/or portable computer, portable data assistant, communications satellite, any piece of equipment or location associated with a wirelessly detectable tag (*e.g.*, a kiosk, news stand, restroom), and telephone. This includes at least Wi-Fi and Bluetooth™ wireless technologies. Thus, the communication can be a predefined structure as with conventional network or simply an ad hoc communication between at least two devices.

Wi-Fi, or Wireless Fidelity, allows connection to the Internet from a couch at home, a bed in a hotel room or a conference room at work, without wires. Wi-Fi is a wireless technology like a cell phone that enables such devices, *e.g.*, computers, to send and receive data indoors and out; anywhere within the range of a base station. Wi-Fi networks use radio technologies called IEEE 802.11 (a, b, g, etc.) to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, with an 11 Mbps (802.11b) or 54 Mbps (802.11a) data rate or with products that contain both bands (dual band), so the networks can provide real-world performance similar to the basic 108aseT wired Ethernet networks used in many offices.

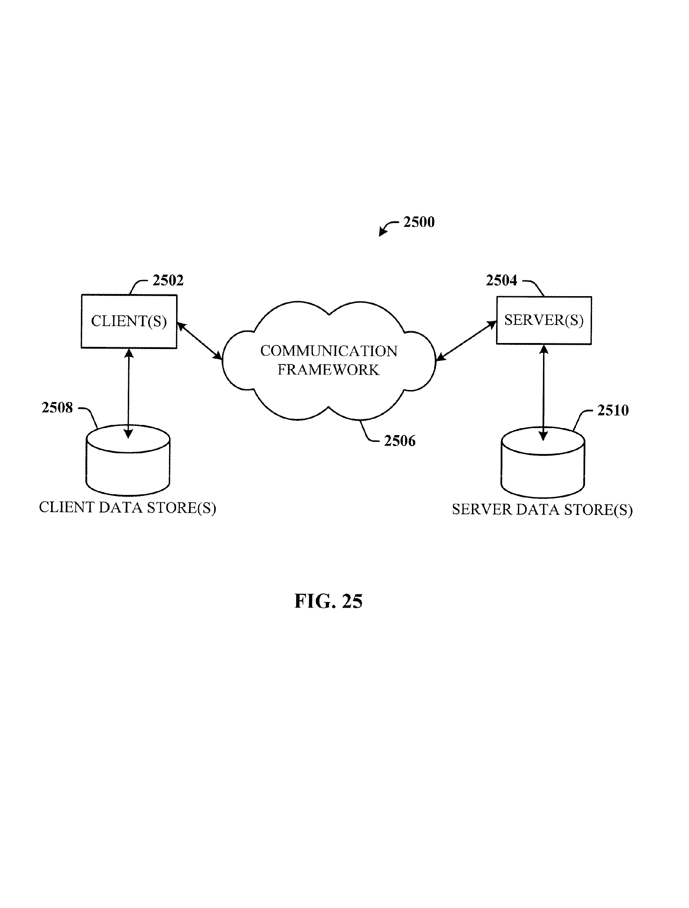

Referring now to FIG. 25, there is illustrated a schematic block diagram of an exemplary computing environment 2500 in accordance with the present invention. The system 2500 includes one or more client(s) 2502. The client(s) 2502 can be hardware and/or software *(e.g.,* threads, processes, computing devices). The client(s) 2502 can house cookie(s) and/or associated contextual information by employing the present invention, for example. The system 2500 also includes one or more server(s) 2504. The server(s) 2504 can also be hardware and/or software *(e.g.,* threads, processes, computing devices). The servers 2504 can house threads to perform transformations by employing the present invention, for example. One possible communication between a client 2502 and a server 2504 can be in the form of a data packet adapted to be transmitted between two or more computer processes. The data packet may include a cookie and/or associated contextual information, for example. The system 2500 includes a communication framework 2506 (*e.g.,* a global communication network such as the Internet) that can be employed to facilitate communications between the client(s) 2502 and the server(s) 2504.

Communications can be facilitated *via* a wired (including optical fiber) and/or wireless technology. The client(s) 2502 are operatively connected to one or more client data store(s) 2508 that can be employed to store information local to the client(s) 2502 (*e.g*., cookie(s) and/or associated contextual information). Similarly, the server(s) 2504 are operatively connected to one or more server data store(s) 2510 that can be employed to store information local to the servers 2504.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that facilitates the generation of an exploded view diagram, comprising, an authoring component that receives an image or set of images and facilitates processing of the image or set of images into the exploded view diagram for user interaction therewith.

2. The system of claim 1, the authoring component allows for layering in the exploded view diagram that indicates how parts of an object in the image or set of images expand, collapse, and occlude one another.

3. The system of claim 1, the authoring component is semi-automatic such that some user intervention is accommodated.

4. The system of claim 1, the image or set of images that are an input to the authoring component are 2D.

5. The system of claim 1, the authoring component facilitates processing an object of the image or set of images into at least one of parts, stacks, and fragments.

6. The system of claim 1, the authoring component facilitates assigning a depth value to at least one part in the exploded view diagram.

7. The system of claim 1, the authoring component facilitates layering of parts by allowing the user to assign a depth value to each fragment of a part.

8. The system of claim 1, the authoring component facilitates associating a plurality of parts with a stack, which stack defines how the parts are allowed to move in relation to one another.

9. The system of claim 8, the stack shares a common explosion axis.

10. The system of claim 1, the authoring component facilitates the generation of a stack tree.

11. The system of claim 1, the authoring component facilitates associating a plurality of parts with a stack, which stack stores an initial position parameter, a current offset parameter, and a maximum offset parameter for each constituent part.

12. The system of claim 11, the authoring component facilitates associating a plurality of parts with a stack, where each part of the plurality of parts depends on a position of a predecessor part.

13. The system of claim 1, the authoring component facilitates the creation of a stack by connecting related parts via a free-form stroke.

14. The system of claim 13, the stack preserves an order of the related parts associated with the free-form stroke.

15. The system of claim 1, further comprising a cutting tool that allows a user to define individual parts of an object in the image or set of images.

16. The system of claim 1, further comprising an annotation tool that allows annotation of a part with a label, and specification of a guideline between any two parts.

17. The system of claim 1, further comprising a viewing component that dynamically filters diagram information in response to a direct user action.

18. The system of claim 1, the viewing component facilitates user interaction that is at least one of,
direct, by allowing the user to cause an object or part in the exploded view diagram to be dragged, resized, or drawn with an input device that includes at least one of a mouse, a key-based device, and voice control; and
indirect, by allowing the user to manipulate an object via at least one of a search interface and animated expand/collapse.

19. A system that facilitates user interaction with an exploded view diagram, comprising, a viewing component that dynamically filters diagram information in response to the user interaction.

20. The system of claim 19, the viewing component accommodates the direct user interaction by allowing the user to directly expand and collapse the exploded view diagram, and indirect user interaction by allowing the user to search for individual parts of the exploded view diagram.

21. The system of claim 19, the exploded view diagram is a 2.5D layer-based representation of an input 2D image or set of images in at least one of an orthogonal view and a perspective view.

22. The system of claim 19, the viewing component facilitates the presentation of animation of at least one of expansion and collapse of the exploded view diagram in response to an input device signal.

23. The system of claim 19, the viewing component facilitates the presentation of labels and guidelines whose anchor points are unoccluded by other parts.

24. A system that facilitates the creation of an interactive exploded view diagram from an image or set of images, comprising:
an authoring component that receives the image or set of images and facilitates processing of the image or set of images into the exploded view diagram; and
a viewing component that facilitates dynamic filtering of diagram information of the exploded view diagram associated with at least one of direct and indirect user interaction.

25. The system of claim 24, the exploded view diagram is a 2.5D layer-based representation of the image or set of images.

26. A computer readable medium having stored thereon computer executable instructions for carrying out the system of claim 24.

27. A computer that employs the system of claim 24.

28. A system that facilitates the creation of an interactive exploded view diagram from an image or set of images, comprising:
an authoring component that receives a 2D image or set of images and facilitates processing of the 2D image or set of images into an exploded view diagram, the authoring component further comprising,
a cutting tool that allows a user to manually separate an object of the 2D image or set of images into constituent parts;
a stacking component that allows the user to associate the constituent parts along an explosion axis using a free-form stroke;
a layering component that allows the assignment of a depth parameter for each of the constituent parts; and
an annotation component that allows the addition of a label for any part and the specification of a guideline between any two parts; and
a viewing component that facilitates dynamic filtering of diagram information of the exploded view diagram associated with direct and indirect user interaction.

29. The system of claim 28, further comprising a fragmentation tool that facilitates fragmenting parts that interlock.

30. The system of claim 28, further comprising a depth tool that at least one of automatically infers the depth parameter for assignment to one of the constituent parts and prompts the user to assign the depth parameter to the part.

31. The system of claim 28, the authoring component automatically calculates and assigns depth values outward from a root part, in a single pass.

32. The system of claim 28, the authoring component utilizes a constraint propagation algorithm to automatically choose the depth parameter of a part to ensure that the part is properly layered relative to other parts.

33. The system of claim 28, further comprising an annotation tool that allows annotation of a part with a label, and specification of a guideline between any two parts.

34. The system of claim 28, further comprising a classifier that automates a feature by making an inference based on one or more data associated with at least one of the authoring component and the viewing component.

35. A computer-readable medium having computer-executable instructions for performing a method of generating an interactive exploded view diagram from an image or set of images, the method comprising:
receiving the image or set of images that contains an object;
segmenting the object into parts;
organizing the parts into a stack;
reducing at least one of the parts into fragments;
layering each part; and
presenting the image as the exploded view diagram.

36. The method of claim 35, the act of organizing is performed with a free-form stroke.

37. The method of claim 35, further comprising at least one of the acts of:
animating at least one of expansion and collapse of the exploded view diagram with an input device signal; and
directly manipulating a portion of the exploded view diagram via constrained direct manipulation.

38. The method of claim 35, further comprising at least one of the acts of:
searching for a hidden part by inputting the part name into a search engine;
directly manipulating a portion of the stack of parts by selecting one of the parts of the stack; and
annotating a part with at least one of a label and a guideline between any two parts.

39. The method of claim 35, further comprising at least one of the acts of:
automatically exposing a hidden part with the viewing component in response to initiating a search of the hidden part;
manually resolving a violation during the act of fragmenting; and
providing manual interaction and automatic processing.

40. The method of claim 35, further comprising at least one of the acts of:
traversing a stack hierarchy in a topological order;
successively computing and updating a position of each part based on a predecessor part and current offset.

41. The method of claim 35, further comprising rendering labels and guidelines whose anchor points are unoccluded by other parts.

42. A system that facilitates the creation of an exploded view diagram from an image, comprising:
means for receiving the image that contains an object;
means for segmenting the object into parts;
means for organizing the parts into a stack;
means for reducing at least one of the parts into fragments;
means for layering each part;
means for labeling each part;
means for adding guidelines between any two parts; and
means for presenting the image as an exploded view of a 2.5D interactive layer-based diagram.
